# EUROPEAN PATENT SPECIFICATION

(11) **EP 1 203 633 B1**
(45) Date of publication and mention of the grant of the patent: **06.07.2005**
(21) Application number: 00830726.6
(22) Date of filing: 02.11.2000
(51) Int. Cl.: B23Q 39/04, B23Q 1/48

(54) **Transfer type machine tool**
WERKZEUGMASCHINE MIT RUNDSCHALTTISCH
Machine outil de transfert rotatif

(43) Date of publication of application: 08.05.2002
(73) Proprietor: IEMCA Giuliani Macchine Italia S.p.A., 48018 Faenza (Ravenna) (IT)
(72) Inventor: Dellamore, Edo, 40050 Monte San Pietro (Bologna) (IT)
(74) Representative: Lanzoni, Luciano

(56) References cited:
- EP-A- 0 937 539
- EP-A- 1 025 953
- DE-U- 8 714 508
- FR-A- 2 394 364
- GB-A- 983 028
- US-A- 5 090 100
- US-A- 5 815 902
- US-A- 6 099 449
- BENSON DONALD: "Machining Gate Valve Bodies" TOOLING AND PRODUCTION, vol. 42, no. 8, - 30 November 1976 (1976-11-30) pages 84-85, XP002165070

## Description

The present invention has for an object a machine tool according to the preamble of claim 1. Such a machine tool is known from EP-A-1 025 953.

In some machine tools of the transfer type known to prior art, the workpieces to be subjected to different machine processes are carried in succession to a plurality of machining stations by a rotary table. Each workpiece is secured by a clamp mounted on the table and is machined by at least one tool at each station.

For processes where the relative position between the workpiece and the tool has to be changed, the tool is normally mounted on a supporting unit that moves in three directions at right angles to each other.

Prior art also teaches the use of a plurality of tools at the same machining station. In these cases, the tools are arranged in a circle on the same supporting unit which rotates about an axis through the centre of the circle in such a way as to bring each tool near the workpiece.

It is also known from document EP-A- 937539 a multi-station machine tool having a round table rotatable around a vertical axis in relation to the machine frame. For creating free space for machining of a workpiece arranged on the round table with the machining unit the support has a vertically extending section with wedge-shaped cross-section, so that the wedge points are directed in a radial direction against the vertical axis. The wedge point encloses an angle which is less than approximately 45 degrees. A ring-shaped connecting device is incorporated, which is firmly connected with the upper support section of each of the supports, in order to increase the stability and the rigidity of the frame formed from the supports.

Moreover, it is also known from document EP-A- 1025953 a machine tool comprising a machine frame and at least one workpiece spindle. A workpiece can be clamped in the workpiece spindle and driven for rotation about a workpiece spindle axis into defined rotary positions by means of a numerically controlled C-axis. A support is provided on which the workpiece spindle is arranged and with which the workpiece spindle can be moved relative to the machine frame and transversely to the workpiece spindle axis into at least two spindle stations stationarily arranged with respect to the machine frame. At least one tool carrier associated with a selected one of the spindle stations is provided, which comprises a transverse-slide carrier mounted on the machine frame and having a transverse slide for a tool movable in an X direction relative to the workpiece spindle located in the selected spindle station.

These known machines have several disadvantages. The disadvantages are mainly linked to the difficulty of moving and correctly positioning the tools relative to the workpiece.

Even where the supporting unit is movable, the combination of different movements along the three orthogonal axes required to correctly position the tool for certain machining processes is extremely complex. This is because the tool has to change direction a large number of times, which considerably prolongs machine times and often leads to imprecise machining.

These disadvantages are particularly serious when the tool has to be moved along a curved path because, however accurate the system may be, the curve has to be approximated.

The aim of the present invention is to overcome the above mentioned disadvantages.

Accordingly, the invention provides a machine tool of the transfer type which is capable of performing a very high number of movements to orientate the tool relative to the workpiece.

Another aim of the invention is to provide a machine where these movements are performed quickly and easily.

Yet another aim of the invention is to provide a machine that can perform any type of process accurately and with extremely limited tolerances.

The above mentioned aims are substantially accomplished by a machine tool of the transfer type as described in claim 1.

The invention will now be described with reference to the accompanying drawings which illustrate a preferred embodiment of it without restricting the scope of the inventive concept, and in which:
- Figure 1 is a front view of a machine tool of the transfer type, with some parts cut away in order to better illustrate others; and
- Figure 2 is an enlarged side view of a part of the machine illustrated in Figure 1.

With reference to the accompanying drawings, the numeral 1 denotes in its entirety a machine according to the invention.

The machine comprises a base 2 which supports a first upright 3. The latter rotatably mounts a rotary unit 4 which has the shape of a prism with a pentagonal base.

At least one gripping element 5 is mounted at the edge of the rotary unit 4. Preferably, there is a plurality of gripping elements 5, consisting of clamps 6, each of which is mounted on a lateral surface 4a of the rotary unit 4.

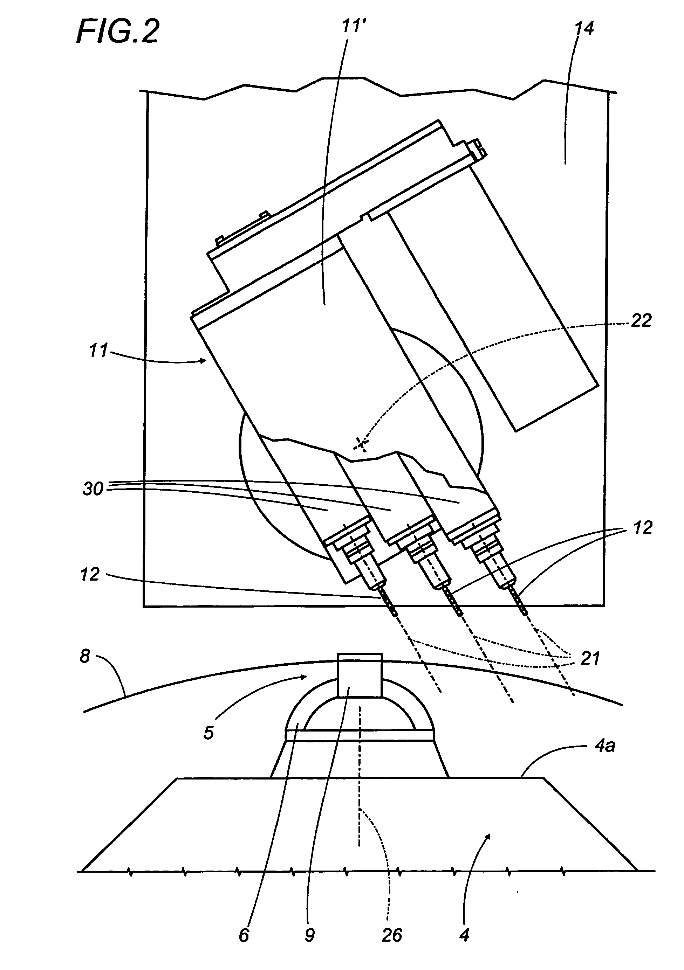

Each gripping element 5 is designed to hold a workpiece 9 and to carry it along a machining path 8, which is only partly illustrated in Figure 2 and which is formed by the rotary unit 4 as it turns about a first axis 7.

At least one machining station 10 is located on the machining path 8. The machining station 10 comprises a supporting unit 11 and at least one spindle 30 mounted on the supporting unit 11. The first upright 3, the machining station 10 and the rotary unit 4 are housed in a box-like casing 20 which isolates them from the outside environment.

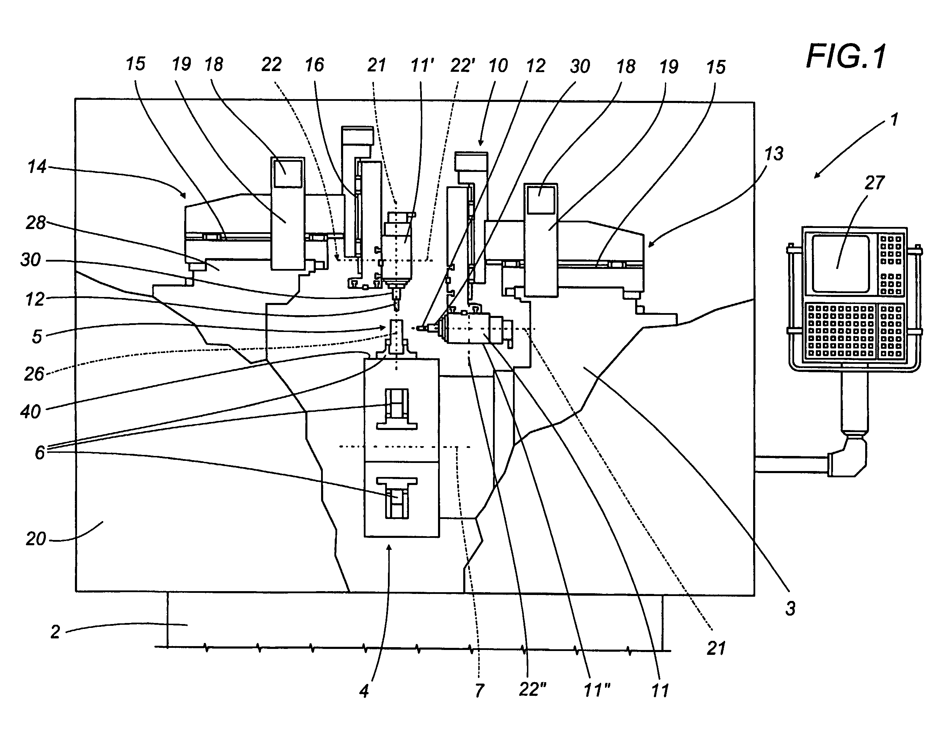

In the preferred embodiment described here, the station 10 comprises a pair of supporting units 11, the first of which, labelled 11' in Figure 1, is mounted perpendicular to the first axis 7, and the second, labelled 11" in Figure 1, is mounted parallel to the first axis 7.

The second supporting unit 11" is linked by a first group 13 of connecting elements to the first upright 3, while the first supporting unit 11' is linked by a second group 14 of connecting elements to a second upright 28, which is in turn rigidly connected to the base 2.

Preferably, each group 13, 14 of connecting elements comprises three guides 15, 16, 17 placed at right angles to each other which enable the supporting unit 11 to move in space. The first and second of these guides 15, 16 are shown in Figure 1, while the third guide 17, extending on the crossbar 18, perpendicular to the plane of Figure 1, is hidden by the connecting bar 19.

Each spindle 30, which mounts a tool 12, has an axis of rotation 21.

In a machine 1 according to the present invention, at least one supporting unit 11 can turn in both directions about a second axis 22 which is substantially perpendicular to the axis of rotation 21 of the spindle 30. In particular, the applicant has found that the best machine performance is achieved by allowing the supporting unit 11 to rotate through an angle ranging from -30° to +30° relative to the condition in which the axis of rotation 21 of the spindle 30 is perpendicular to the machining path 8.

Figure 2 shows the first supporting unit 11' at the end of its rotation about the second axis 22' which, in this case, is also parallel to the first axis 7. In another possible embodiment of the machine 1, one of the supporting units 11, for example, the second supporting unit 11" illustrated in Figure 1, can rotate about an axis, labelled 22" in Figure 1, which is perpendicular to both the spindle 30 axis of rotation 21 and the first axis 7.

As shown in Figure 2, the supporting unit 11 advantageously mounts a plurality of spindles 30 side by side in such a way that their axes of rotation 21 are parallel to each other. Each spindle 30 can also move in a direction parallel to the supporting unit 11 from a working position where the tool 12 machines the workpiece 9 to an idle position where the tool 12 does not machine the workpiece 9.

Advantageously, the gripping elements 5 can also rotate so as to orientate the workpiece 9 relative to the tools 12. Looking in more detail, the gripping elements 5 are rotatably mounted on the rotary unit 4 in such a way as to turn about a third axis 26, which is substantially perpendicular to the first axis 7.

The machine according to the invention further comprises means 27 for controlling the rotation of the supporting unit 11 and of the gripping element 5. These means 27 typically comprise a numeric control system that co-ordinates the movements of the rotary unit 4, of the supporting unit 11, of the spindles 30 and of the gripping element 5, in such a way as to perform the required machining processes on the workpiece 9.

The invention has important advantages.

The machine tool according to the invention permits a large number of relative movements between the tool and the workpiece. In fact, the tool can perform extremely complex movements, especially curved movements, relative to the workpiece. This result is accomplished by combining the rotational motion of the supporting unit about the second axis, the translational motion of the spindle in a direction parallel to its axis of rotation, and, if necessary, the rotational motion of the gripping element about the third axis. Moreover, these movements take much less time than the movements performed by known machines.

The solution provided by the present invention also allows the tool to be orientated and moved relative to the workpiece extremely accurately. This means that machining tolerances can be significantly reduced. In particular, this result is possible because the tool can follow complex paths achieved by combining a few simple movements of the machine parts.

## Claims

1. A machine tool of the transfer type comprising:
- a base (2) which supports a first upright (3);
- a unit (4) mounted on the upright (3) and rotatable about a first axis (7) whose rotational motion forms a machining path (8), said first axis (7) being parallel to said base (2);
- at least one gripping element (5) mounted at the edge of the rotary unit (4) and designed to carry at least one workpiece (9) along the machining path (8); and
- at least one machining station (10) located on the machining path (8), the machining station (10) comprising at least one unit (11) supporting at least one spindle (30) and at least one tool (12) mounted on the spindle (30), said spindle (30) having an axis of rotation (21), the supporting element (11) turning about a second axis (22) which is substantially perpendicular to the axis of rotation (21) of the spindle (30);
the machine tool being **characterised in that** the gripping element (5) is rotatably mounted on a lateral surface (4a) of the rotary unit (4) parallel to said first axis (7), said gripping element (5) turning relative to the rotary unit (4) about a third axis (26) that is substantially perpendicular to the first axis (7) to enable the workpiece (9) to be oriented relative to the tool (12).

2. The machine tool according to claim 1, **characterised in that** the second axis (22) is parallel to the first axis (7).

3. The machine tool according to claim 1 or 2, **characterised in that** the second axis (22) is perpendicular to the first axis (7).

4. The machine tool according to any of the foregoing claims, **characterised in that** the supporting unit (11) can turn about the second axis (22) in both directions of rotation.

5. The machine tool according to claim 4, **characterised in that** the supporting unit (11) can turn about the second axis (22) through an angle of ranging from -30° to +30° in both directions of rotation.

6. The machine tool according to any of the foregoing claims, **characterised in that** the spindle (30) can move in a direction parallel to the axis of rotation (21) relative to the supporting unit (11).

7. The machine tool according to any of the foregoing claims, **characterised in that** the machining station (10) comprises a plurality of spindles (30), said spindles (30) being mounted side by side on the supporting unit (11) in such a way that their axes of rotation (21) are parallel to each other.

8. The machine tool according to claim 1 **characterised in that** it comprises means (27) for controlling the rotation of the supporting unit (11) and of the gripping element (5).

## Patentansprüche

1. Werkzeugmaschine vom Transfertyp, enthaltend:
- einen Sockel (2), welcher einen ersten Ständer (3) trägt;
- eine an dem Ständer (3) montierte und um eine erste Achse (7) drehbare Einheit (4), deren Drehbewegung eine Bearbeitungsbahn (8) bildet, wobei die genannte erste Achse (7) parallel zu dem genannten Sockel (2) verläuft;
- wenigstens ein Greifelement (5), montiert an dem Rand der drehbaren Einheit (4) und bestimmt, wenigstens ein Werkstück (9) an der Bearbeitungsbahn (8) zu tragen; und
- wenigstens eine an der Bearbeitungsbahn (8) angeordnete Bearbeitungsstation (10), wobei die Bearbeitungsstation (10) wenigstens eine Einheit (11) enthält, die wenigstens eine Spindel (30) und wenigstens ein an der Spindel (30) montiertes Werkzeug (12) trägt, wobei die genannte Spindel (30) eine Drehachse (21) aufweist, und wobei sich die Trägereinheit (11) um eine zweite Achse (22) dreht, welche im wesentlichen lotrecht zu der Drehachse (21) der Spindel (30) verläuft;
wobei die Werkzeugmaschine **dadurch gekennzeichnet ist, dass** das Greifelement (5) drehbar an einer seitlichen Oberfläche (4a) der drehbaren Einheit (4) und parallel zu der genannten ersten Achse (7) montiert ist, wobei das genannte Greifelement (5) sich im Verhältnis zu der drehbaren Einheit (4) um eine dritte Achse (26) dreht, die im wesentlichen lotrecht zu der ersten Achse (7) verläuft, um das Werkstück (9) in die Lage zu versetzen, entsprechend zu dem Werkzeug (12) ausgerichtet zu werden.

2. Werkzeugmaschine nach Patentanspruch 1, **dadurch gekennzeichnet, dass** die zweite Achse (22) parallel zu der ersten Achse (7) verläuft.

3. Werkzeugmaschine nach Patentanspruch 1 oder 2, **da** **durch gekennzeichnet, dass** die zweite Achse (22) lotrecht zu der ersten Achse (7) verläuft.

4. Werkzeugmaschine nach einem beliebigen der vorstehenden Patentansprüche, **dadurch gekennzeichnet, dass** die Trägereinheit (11) sich in beiden Drehrichtungen um die zweite Achse (22) drehen kann.

5. Werkzeugmaschine nach Patentanspruch 4, **dadurch gekennzeichnet, dass** die Trägereinheit (11) sich in beiden Drehrichtungen um die zweite Achse (22) drehen kann, und zwar um einen Winkel, der von -30° bis +30° reicht.

6. Werkzeugmaschine nach einem beliebigen der vorstehenden Patentansprüche, **dadurch gekennzeichnet, dass** die Spindel (30) sich in einer Richtung parallel zu der Drehachse (21) im Verhältnis zu der Trägereinheit (11) bewegen kann.

7. Werkzeugmaschine nach einem beliebigen der vorstehenden Patentansprüche, **dadurch gekennzeichnet, dass** die Bearbeitungsstation (10) eine Anzahl von Spindeln (30) enthält, wobei die genannten Spindeln (30) Seite an Seite an der Trägereinheit (11) auf solche Weise montiert sind, dass deren Drehachsen (21) parallel zueinander verlaufen.

8. Werkzeugmaschine nach Patentanspruch 1, **dadurch gekennzeichnet, dass** sie Mittel (27) zum Steuern der Umdrehung der Trägereinheit (11) und des Greifelementes (5) enthält.

## Revendications

1. Une machine-outil de transfert rotatif, comprenant :
- un bâti (2) qui supporte un premier montant (3) ;
- un groupe (4) monté sur le montant (3), pouvant tourner autour d'un premier axe (7) et dont le mouvement de rotation définit un parcours d'usinage (8), ledit premier axe (7) étant parallèle audit bâti (2) ;
- au moins un élément de blocage (5) monté au niveau du bord du groupe rotatif (4) et destiné à acheminer au moins une pièce à usiner (9) le long du parcours d'usinage (8) ; et
- au moins une station d'usinage (10) située sur le parcours d'usinage (8), la station d'usinage (10) comprenant au moins un groupe (11) supportant au moins un mandrin (30) et au moins un outil (12) monté sur le mandrin (30), ledit mandrin (30) ayant un axe de rotation (21) et le groupe de support (11) tournant autour d'un deuxième axe (22) qui est essentiellement perpendiculaire à l'axe de rotation (21) du mandrin (30) ;
la machine-outil étant **caractérisée en ce que** l'élément de blocage (5) est monté de façon rotative sur une surface latérale (4a) du groupe rotatif (4) parallèle audit premier axe (7), ledit élément de blocage (5) tournant par rapport au groupe rotatif (4) autour d'un troisième axe (26) qui est essentiellement perpendiculaire au premier axe (7) pour permettre l'orientation de la pièce à usiner (9) par rapport à l'outil (12).

2. La machine-outil selon la revendication 1, **caractérisée en ce que** le deuxième axe (22) est parallèle au premier axe (7).

3. La machine-outil selon la revendication 1 ou 2, **caractérisée en ce que** le deuxième axe (22) est perpendiculaire au premier axe (7).

4. La machine-outil selon l'une quelconque des revendications précédentes, **caractérisée en ce que** le groupe de support (11) peut tourner autour du deuxième axe (22) dans les deux sens de rotation.

5. La machine-outil selon la revendication 4, **caractérisée en ce que** le groupe de support (11) peut tourner autour du deuxième axe (22) d'un angle compris entre -30° et +30° dans les deux sens de rotation.

6. La machine-outil selon l'une quelconque des revendications précédentes, **caractérisée en ce que** le mandrin (30) peut se déplacer dans une direction parallèle à l'axe de rotation (21) par rapport au groupe de support (11).

7. La machine-outil selon l'une quelconque des revendications précédentes, **caractérisée en ce que** la station d'usinage (10) comprend une pluralité de mandrins (30), lesdits mandrins (30) étant montés côte à côte sur le groupe de support (11) de manière à ce que leurs axes de rotation (21) soient parallèles entre eux.

8. La machine-outil selon la revendication 1, **caractérisée en ce qu'**elle comprend des moyens (27) pour commander la rotation de groupe de support (11) et de l'élément de blocage (5).
